# EUROPEAN PATENT APPLICATION

(11) **EP 1 647 589 A2**
(43) Date of publication of application: **19.04.2006**
(21) Application number: 05019837.3
(22) Date of filing: 13.09.2005
(51) Int. Cl.: C10B 53/07, C10B 47/44, C10G 1/10

(54) **Pyrolysis system for treating waste synthetic highly polymerized compound**

(30) Priority: 25.09.2004 KR 2004077580
(71) Applicant: Alpo Co., Ltd., Kimhwa-eub Chulwon-gun Kangwon do (KR)
(72) Inventor: Ku, Jae Wan, Chulwon-gun Kangwon-do (KR)
(74) Representative: Sawodny, Michael-Wolfgang

(57) **Abstract**

Disclosed is a successive pyrolysis system of waste synthetic-highly polymerized compound for successively pyrolizing combustible waste by indirect heating at a pyrolysis chamber maintaining an anaerobic or hypoxic environment, and producing refined oil like heavy oil and light oil according to boiling points at a distillation column to be used as heat source for the pyrolysis of the waste. The successive pyrolysis system comprises a hopper; an automatic waste injection device, which discharges a predetermined amount of waste from the hopper; a pyrolysis chamber for maintaining a high-temperature and hypoxic environment, and successively pyrolizing the waste by indirect heating; a gas burning chamber for burning noncondensable gas among pyrolysis gas produced at the time of the pyrolysis of the waste, and providing heat of a predetermined temperature to the outer surface of the pyrolysis chamber to be used as heat source for the pyrolysis of the waste; a refined oil producing means for producing refined oil from the pyrolysis gas reformed after going through catalyst reaction and providing residual noncondensable gas to the gas burning chamber; and an automatic discharging device for successively discharging ashes transported after being pyrolized from the pyrolysis chamber.

## Description

### CROSS-REFERENCE TO RELATED APPLICATIONS

This application claims benefit under 35 U.S.C. § 119 from Korean Patent Application No. 2004-77580, filed on September 25, 2004, the entire content of which is incorporated herein by reference.

### BACKGROUND OF THE INVENTION

### Field of the Invention:

The present invention relates to a successive pyrolysis system of waste synthetic-highly polymerized component to successively pyrolize combustible waste like waste plastics by indirect heating at a pyrolysis chamber, in which an anaerobic or hypoxic environment is maintained, and produce refined oil like heavy oil and light oil according to boiling points at a distillation column to be used as heat source for the pyrolysis of the waste.

### Description of the Related Art

More particularly, the present invention relates to a successive pyrolysis system of waste synthetic polymerized component, which simultaneously performs the processes of successively desiccating, melting and pyrolizing the waste synthetic-highly polymerized compound like waste plastics in a pyrolysis chamber, in which a high-temperature and hypoxic environment is maintained, and does not need separate supply of fuel from the outside by recycling the noncondensable gas among the pyrolysis gas as heat source for the pyrolysis.

The pyrolysis principle applied in above-described pyrolysis system is that when heat is indirectly provided to combustible waste in an anaerobic or hypoxic environment, a reductive environment is created in the pyrolysis chamber, and the combustible waste is decomposed and evaporated as gas and liquid, and what is not decomposed remains as solid (char).

That is, waste (waste synthetic-highly polymerized compound) + heat = gas (noncondensable gas) + liquid (refined oil) + solid (char).

The pyrolysis device for pyrolizing combustible waste like waste plastics discharged from various factories adopts a batch method, by which a predetermined amount of waste is injected into a pyrolysis chamber, a cover of the pyrolysis chamber is closed and the pyrolysis chamber is heated at a predetermined temperature by providing heat of high-temperature from the outside, and thereby the waste is pyrolized and converted to gaseous, liquid or solid material.

The batch-type pyrolysis system involves many difficulties in pyrolizing waste, in which various materials are mixed. Especially, when foreign materials (glassware, earth, nonferrous metals, etc.) are mixed, heat transfer is not smoothly performed, and there is limit in producing refined oil from the waste by the pyrolysis, and thus utility value thereof is very small.

On the other hand, a technique for producing refined oil like heavy oil according to boiling points from the pyrolysis gas by separately installing a distillation column at the side of the pyrolysis device for pyrolizing combustible waste, and utilizing the refined oil as heat source of the pyrolysis is developed. Here, the pyrolysis chamber and the transport shaft are exposed to heat of high-temperature (250-450°C), are repeatedly expanded and contracted while the pyrolysis device is driven, and are thermal-expanded. Therefore, there is a problem that the piping that connects the pyrolysis chamber and the distillation column is damaged or broken down.

### SUMMARY OF THE INVENTION

Therefore, the object of the present invention is to provide a successive pyrolysis system of waste synthetic-highly polymerized compound that maximizes the operating rate of the pyrolysis device by successively injecting a predetermined amount of waste and successively discharging ashes exhausted after going through the pyrolysis process, when pyrolizing waste synthetic-highly polymerized compound like waste plastics by indirect heating in a pyrolysis chamber, in which a high-temperature and anaerobic or hypoxic environment is maintained.

Another object of the present invention is to provide a successive pyrolysis system of waste synthetic-highly polymerized compound, wherein a distillation column for producing refined oil according to boiling points from the pyrolysis gas is installed perpendicularly to the upper part of the pyrolysis gas outlet, and a buffer means is installed at the connection portion between the pyrolysis gas outlet and the distillation column to protect the connection portion against contraction and expansion.

Another object of the present invention is to provide a successive pyrolysis system of waste synthetic-highly polymerized compound that produces refined oil such as heavy oil, light oil and volatile oil according to boiling points from the pyrolysis gas in the distillation column and recycles the refined oil as heat source of the pyrolysis of the waste.

Another object of the present invention is to provide a successive pyrolysis system of waste synthetic-highly polymerized compound that improves the pyrolysis speed of the waste by optimizing the contact surface area between the waste and the heat source of the pyrolysis at the time of the pyrolysis.

In order to achieve the above-described objects of the present invention, there is provided a successive pyrolysis system of waste synthetic-highly polymerized compound, comprising: a hopper, which waste is provided to and is stored in a predetermined amount; an automatic waste injection device, which discharges a predetermined amount of waste from the hopper, and comprises an air removing means for maintaining a hypoxic environment inside by removing external air flowing in along with the waste; a pyrolysis chamber for maintaining a high-temperature and hypoxic environment, and successively pyrolizing the waste by indirect heating, in which two or more transport screws are installed rotatably by a driving means to transport, melt and evaporate the waste provided from the waste injection device; a gas burning chamber for burning noncondensable gas among pyrolysis gas produced at the time of the pyrolysis of the waste, and providing heat of a predetermined temperature to the outer surface of the pyrolysis chamber to be used as heat source for the pyrolysis of the waste provided to the pyrolysis chamber; a refined oil producing means connected perpendicularly to the upper part of a gas outlet of the pyrolysis chamber, for producing refined oil from the pyrolysis gas catalyst reacted at a catalysis reaction column according to boiling point at a distillation column, and providing the refined oil to the gas burning chamber as initial fuel; and an automatic discharging device for successively discharging ashes transported after being pyrolized from the pyrolysis chamber, comprising an air removing means for maintaining a hypoxic environment inside by removing external air, which flows in from the outside when discharging ashes, and the pyrolysis gas discharged from the pyrolysis chamber

According to a preferred embodiment of the present invention, the above-described waste injection device comprise a first pusher, which is installed on the bottom of a second slide gate to be slidingly moved in a horizontal direction, when a third cylinder is driven, and transfers the waste discharged from an interim storing hopper in a horizontal direction, and a second pusher, which is installed on the perpendicular upper part of the inlet of the pyrolysis chamber to be slidingly moved upward and downward when a fourth cylinder is driven, and injects the waste transferred by the first pusher into the inlet of the pyrolysis chamber.

Also, the above-described automatic waste injection device and discharging device comprise a first slide gate, which is driven by the first cylinder to be slidingly moved along the guiding groove formed in the gate body, and respectively opens and shuts off the hopper outlet and the outlet of the pyrolized remnants, and a second slide gate, which is driven by the second cylinder to be slidingly moved along the guiding groove formed in the gate body and forms the interim storing hopper for maintaining a hypoxic state in a space between the first slide gate.

Also, the waste is measured by a load cell or a photo sensor and then is injected into the hopper to store the waste in the hopper in a predetermined amount by a sensor for detecting fixed quantity injection installed in the above-described hopper.

Also, the above-described first and second slide gates comprise an extension guide formed to be extended from the gate body for supporting the slider to slide in a horizontal direction when the slider secedes from the guiding groove; a seal maintaining means, which consists of a ball for maintaining seal by pressing the upper surface of the slider moving slidingly along the guide groove formed in the gate body and the extension guide and sticking the slider to the body, and an elastic member for elastically supporting the ball; and a guider, which is connected to a connection groove formed between the bottom surface of the slider and the contact surface of the extension guide and prevents friction between the gate body and the slider when the slider moves.

Also, the quality of the material of the guider is weaker than that of the slider, to prevent the above-described slider from being broken by friction when the slider moves.

Also, a foreign material removing case is comprised. The foreign material removing case is mounted on the gate body to communicate with the guiding groove of the above-described first and the second slide gates, and accumulates foreign materials discharged from the guiding grooves when the slider moves.

Also, the above-described pyrolysis chamber comprises a section for preventing backward flow of gas having a circular section, for minimizing the gap between the transport screw and the inlet and outlet casing of the pyrolysis chamber and intercepting backward flow of the pyrolysis gas, a transport space formed on the lower part of the pyrolysis chamber for transporting waste when the transport screw is driven, and a pyrolysis gas staying space formed on the upper part of the pyrolysis chamber for holding the pyrolysis gas evaporated when pyrolizing the waste that are melted and evaporated.

Also, the cross section of the above-described pyrolysis chamber is formed to be a circle, an oval, a rectangle or a streamline.

Also, the size of the above-described pyrolysis gas staying space of the pyrolysis chamber is formed to be a half of the size of the diameter of the transport wing formed on the transport screw in the shape of a spiral.

Also, a connection member is comprised. The connection member is installed on the connection portion between the pyrolysis gas outlet of the pyrolysis chamber and the distillation column, and has elasticity to protect the connection portion when the pyrolysis chamber is contracted and thermal-expanded in a longitudinal direction thereof, by the repeated driving thereof.

Also, the pyrolysis gas outlet of the above-described pyrolysis chamber is installed inside the transfer passage of heat source of pyrolysis of the waste.

Also, a second burner is installed in the transfer passage of heat source of pyrolysis for pyrolizing the waste.

### BRIEF DESCRIPTION OF THE DRAWINGS

The above aspects and features of the present invention will be more apparent by describing certain embodiments of the present invention with reference to the accompanying drawings, in which:

Fig. 1 is a schematic diagram of a successive pyrolysis system of waste synthetic-highly polymerized compound in accordance with the present invention.

Fig. 2 is a sectional view from line A-A in Fig. 1

Fig. 3 is a sectional view from line A-A in Fig. 1 showing a modified embodiment of a transport screw installed in a pyrolysis chamber.

Fig. 4 is an expanded view of main parts of part "B" illustrated in Fig. 1.

Fig. 5 is an expanded view of main parts of part "C" illustrated in Fig. 1.

Fig. 6 is an expanded view of main parts of part "D" illustrated in Fig. 1.

Fig. 7 shows the functioning of the thermal expansion connection illustrated in Fig. 6.

Fig. 8 shows applications of a slide gate for successively injecting and discharging waste in a predetermined amount in the successive pyrolysis system of waste synthetic-highly polymerized compound in accordance with the present invention.

Fig. 9 shows applications of a pusher for compulsorily injecting the waste into the pyrolysis chamber in the successive pyrolysis system of waste synthetic-highly polymerized compound in accordance with the present invention.

Fig. 10 is a sectional view from line E-E in Fig. 8.

Fig. 11 is a sectional view from line F-F in Fig. 8.

Fig. 12 is a sectional view from line G-G in Fig. 8.

Fig. 13 is an expanded view of the part "H" illustrated in Fig. 12.

### DETAILED DESCRIPTION OF THE PREFERRED EMBODIMENTS

Preferred embodiments of the present invention will be explained in detail on below, which is to explain the present invention in detail to the extent that one skilled in the art may easily work the invention, and does not limit the technical idea and scope of the present invention.

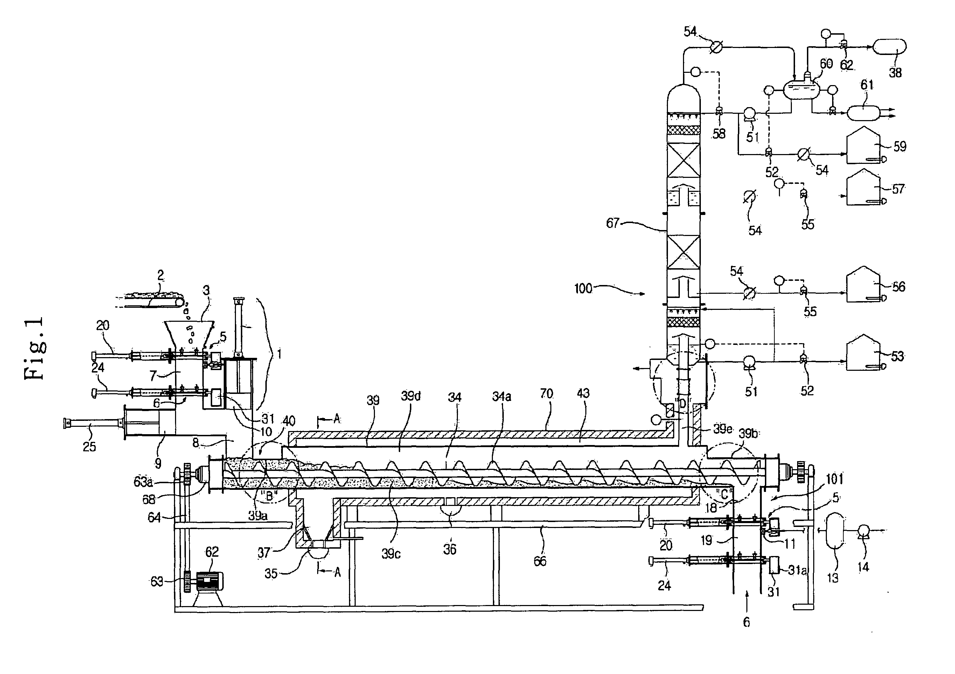

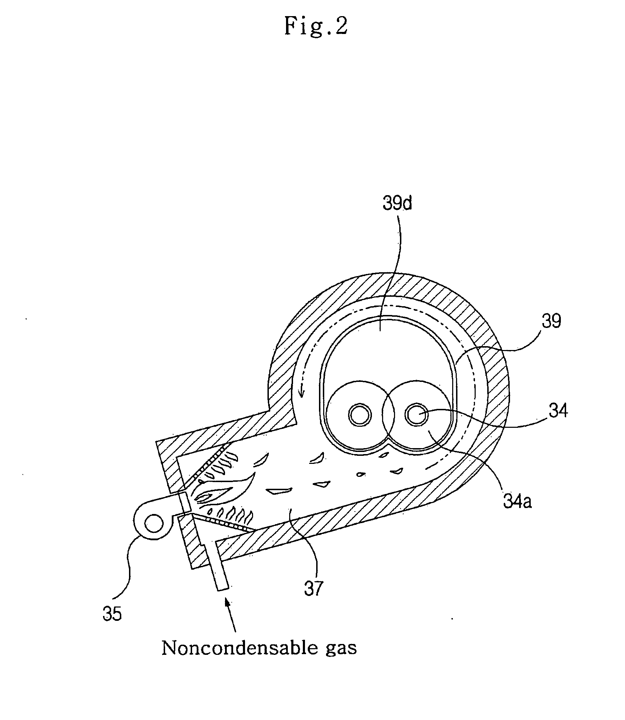

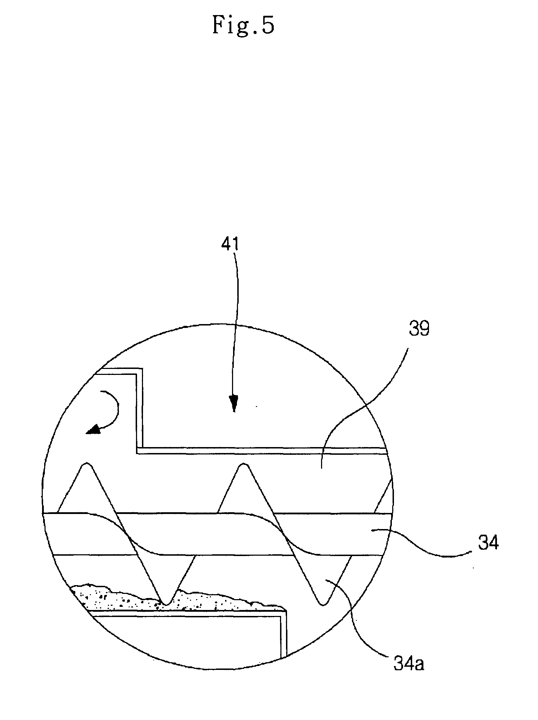

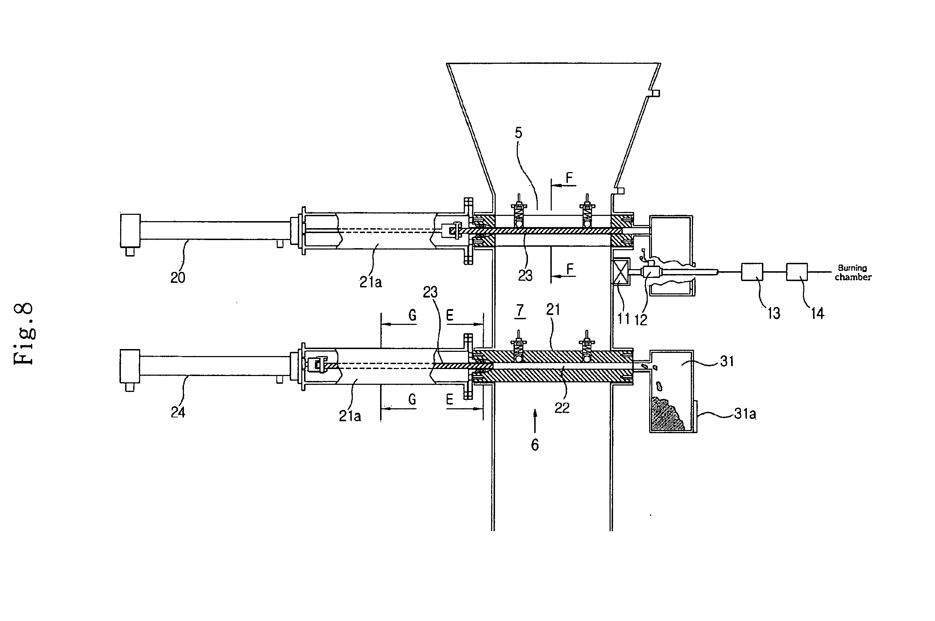

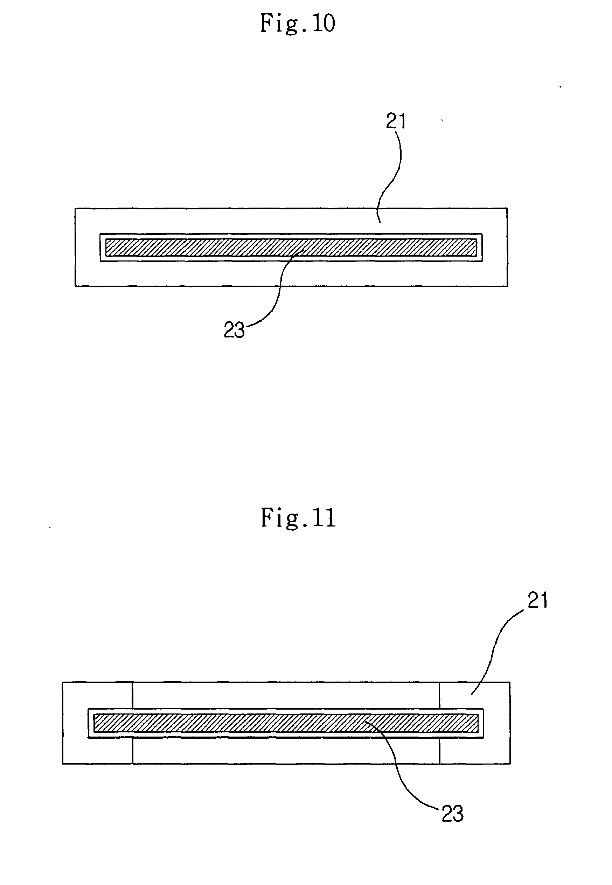

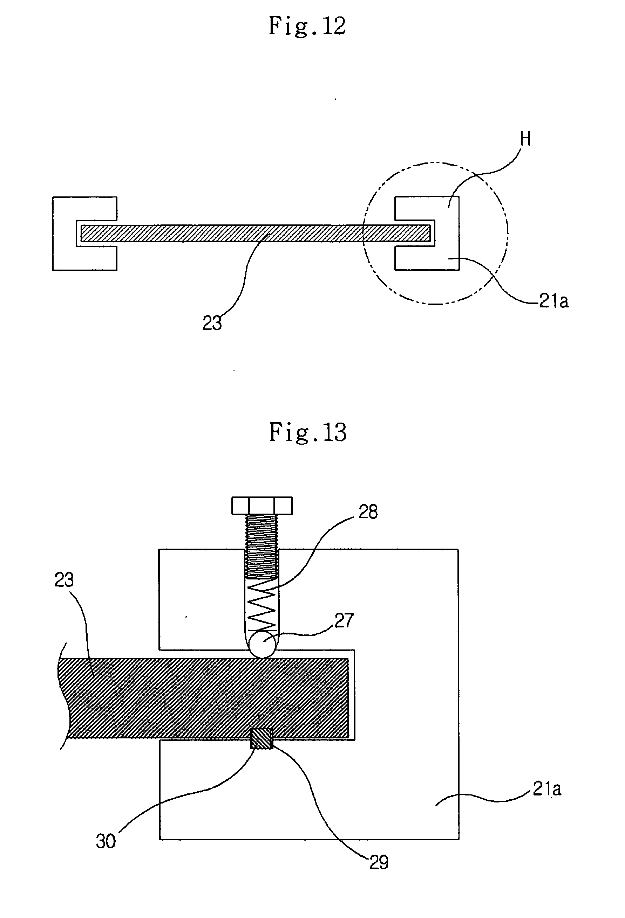

As illustrated in Figs. 1-12, the successive pyrolysis system of waste synthetic-highly polymerized compound in accordance with the present invention comprises a hopper 3, which the waste is provided to and is stored in a predetermined amount; an automatic waste injection device 1, which automatically discharges a predetermined amount of waste from the hopper 3, and comprises an air removing means for maintaining a hypoxic environment inside by removing external air flowing in along with the waste; a pyrolysis chamber 39 for maintaining a high-temperature (250-450°C) and hypoxic environment, and successively pyrolizing the waste by indirect heating, in which two or more transport screws 34 are installed rotatably by a driving means to transport, melt and evaporate the waste provided from the waste injection device 1.

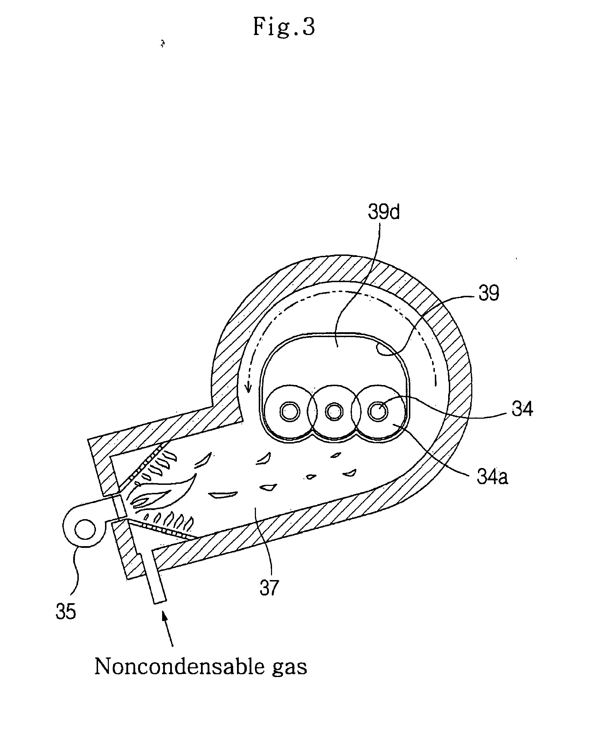

Here, it is needless to say that three transport screws 34 may be used as illustrated in Fig. 3.

The above-described driving means comprises a driving motor 62, a driving gear 63 mounted on the driving motor 62, and a driven gear 63a, which is mounted on one end of the transport screw 34, is connected to the driving gear 63 through a chain 64, and rotates the transport screw 34 having a transport wing 34a formed to be in the shape of a spiral thereon.

Also, the successive pyrolysis system of waste synthetic-highly polymerized compound in accordance with the present invention comprises a gas burning chamber 37 for providing heat of a predetermined temperature to the outer surface of the pyrolysis chamber 39 by burning the noncondensable gas among the pyrolysis gas produced when pyrolizing the waste, to be used as heat source of the pyrolysis of the waste provided to the pyrolysis chamber 39; and a refined oil producing means 100, which is connected perpendicularly to the upper part of gas outlet 39e of the pyrolysis chamber 39, for producing refined oil at the distillation column 67 according to boiling points from the pyrolysis gas reformed after going through the catalysis reaction to reform high molecular weight gas having many carbon rings to low molecular weight gas having less carbon rings at the catalysis reaction column 45, and providing the residual noncondensable gas to the gas burning chamber as initial fuel.

Also, the successive pyrolysis system of waste synthetic-highly polymerized compound in accordance with the present invention comprises an automatic discharging device 101 for successively discharging ashes transported after being pyrolized from the pyrolysis chamber, which comprises an air removing means for maintaining a hypoxic environment inside by removing external air flowing in from the outside when discharging ashes and removing the pyrolysis gas discharged from the pyrolysis chamber 39.

Also, the above-described automatic waste injection device 1 and discharging device 101 comprise a first slide gate 5, wherein a slider 23 is driven by the first cylinder 20 to be slidingly moved along the guiding groove 22 formed in the gate body 21, and respectively opens and shuts off the outlet of the hopper 3 and the outlet of the pyrolized remnants 18, and a second slide gate 6, wherein a slider 23 is driven by the second cylinder to be slidingly moved along the guiding groove 22 formed in the gate body 21 and forms an interim storing hopper 7 for maintaining a hypoxic state in a space between the first slide gate 5.

Also, the air removing means for removing the external air flowing into the interim storing hopper along with the waste comprises a filter 11 communicating with the interim storing hopper 7 and removing foreign materials like dust, a vacuum valve 12 connected to a case receiving the filter 11, a vacuum tank 13 connected to the vacuum valve 12 for maintaining a degree of vacuum below a predetermined pressure, and a vacuum pump 14 connected to the vacuum tank 13.

Here, it is desirable to form a vacuum tank to have a capacity of more than two times of the capacity of the interim storing hopper 7 at least. When the vacuum valve 12 is open, the air inside the interim storing hopper 7 is sucked into the vacuum tank 13 in an instant, and the vacuum valve 12 is shut off.

Also, the above-described automatic waste injection device 1 comprises a first pusher 9, which is installed on the bottom of a second slide gate 6 to be slidingly moved in a horizontal direction, when a third cylinder 25 is driven, and moves the waste discharged from the interim storing hopper 7 in a horizontal direction, and a second pusher 10, which is installed on the perpendicular upper part of the inlet of the pyrolysis chamber 39 to be slidingly moved upward and downward when a fourth cylinder 26 is driven, and injects the waste moved by the first pusher 9 into the inlet of the pyrolysis chamber 39.

Also, the waste provided by a transport conveyer 2 is measured by a load cell (not illustrated) or a photo sensor (not illustrated) and then is injected into the hopper 3 to store a predetermined amount of the waste in the hopper 3 by a sensor for detecting fixed quantity injection 4 installed in the above-described hopper.

Also, the above-described first and second slide gates 5 and 6 comprise an extension guide 21 a formed to be extended from the gate body 21 for supporting the slider 23 to slide in a horizontal direction when the slider secedes from the guiding groove 22; a seal maintaining means, which consists of a ball 27 for maintaining seal by pressing the upper surface of the slider moving slidingly along the guide groove 22 formed in the gate body 21 and the extension guide 21 a and sticking the slider 23 to the gate body 21, and an elastic member 28 for elastically supporting the ball 27; and a guider 30 connected to a connection groove 29 formed between the bottom surface of the slider 23 and the contact surface of the extension guide 21a for preventing friction between the gate body 21 and the slider 23 when the slider 23 moves.

Also, the quality of the material of the guider 30 is weaker than that of the slider 23, to prevent the slider 23 from being broken by friction when the above-described slider 23 moves.

Also, a foreign material removing case 31 is comprised. The foreign material removing case 31 is mounted on the gate body 21 to communicate with the guiding groove 22 of the above-described first and the second slide gates 5 and 6, accumulates foreign materials discharged from the guiding grooves 22 when the slider 23 moves, and has a door 31 a that is opened and shut off to remove foreign materials during the operation of the device.

Also, the above-described pyrolysis chamber 39, , comprises a section for preventing backward flow of gas 40,41, whose section is formed to be a circle, for minimizing the gap between the transport screw 34 and the inlet and outlet casings 39a,39b of the pyrolysis chamber 39 and intercepting backward flow of the pyrolysis gas, a transport space 39c formed on the lower part of the pyrolysis chamber 39 for transporting waste when the transport screw 34 is driven, and a pyrolysis gas staying space 39d formed on the upper part of the pyrolysis chamber 39 for holding the pyrolysis gas evaporated when pyrolizing the waste that are melted and evaporated.

Also, the cross section of the above-described pyrolysis chamber 39 is formed to be a circle, an oval, a rectangle or a streamline. Also, the size of the above-described pyrolysis gas staying space 39d of the pyrolysis chamber 39 is formed to be a half of the size of the diameter of the transport wing 34a formed on the transport screw 34 to have the shape of a spiral.

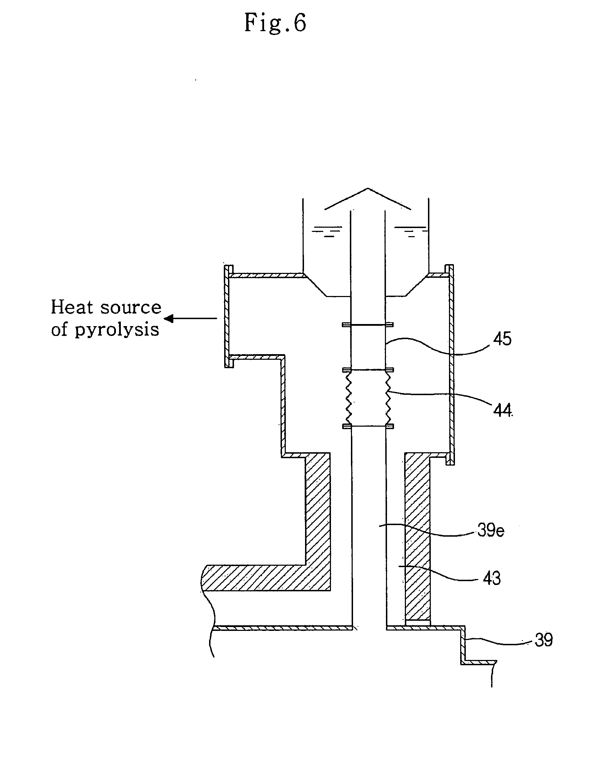

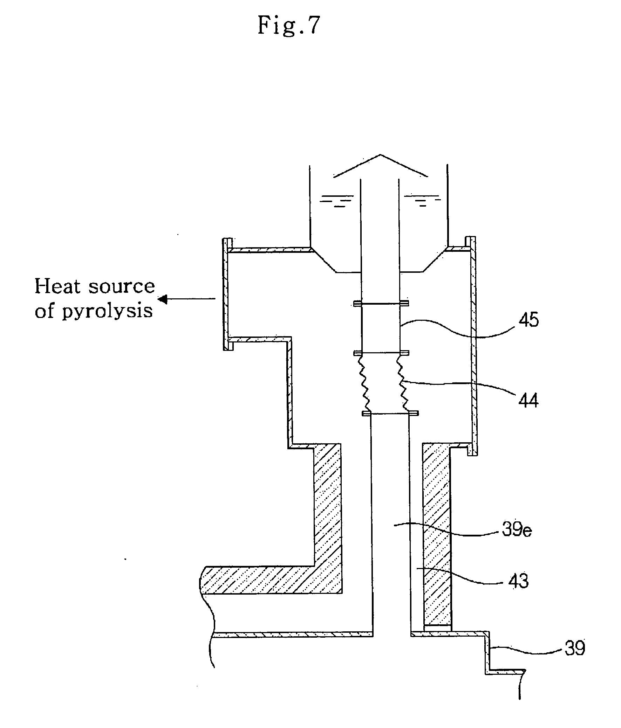

Also, a connection member 44 is comprised. The connection member 44 is installed on the connection portion between the pyrolysis gas outlet 39e of the pyrolysis chamber 39 and the distillation column 67, and has elasticity to protect the connection portion when the pyrolysis chamber 39 is contracted and thermal-expanded in a longitudinal direction thereof, by the repeated driving thereof, as illustrated in Figs. 6 and 7.

Also, the pyrolysis gas outlet 39e of the above-described pyrolysis chamber 39 is installed inside the transfer passage of heat source of pyrolysis of the waste 43. Also, a second burner 36 is installed in the transfer passage of heat source of pyrolysis of the waste 43.

In the drawings, reference numeral 51 is a transport pump, reference numeral 52 is a level control valve, reference numeral 53 is a storing tank of heavy oil, reference numeral 54 is a heat exchanger, reference numeral 55 is a discharge control valve, reference numerals 56 and 57 are storing tanks of light oil, reference numeral 58 is a temperature control valve, reference numeral 59 is a storing tank of volatile oil, and reference numeral 61 is a oil-water separation device.

The use of the successive pyrolysis system of waste synthetic-highly polymerized compound in accordance with the present invention will now be explained with reference to the attached drawings.

As illustrated in Fig. 1, combustible solid waste including waste synthetic-highly polymerized compound like waste plastics is provided through the transport conveyer 2 to the above-described hopper 3 in a predetermined amount after being crushed and selected.

Here, a predetermined amount of the waste is injected into the hopper 3 by controlling a predetermined amount of waste by the volume with the sensor for detecting fixed amount injection 4 installed on the above-described hopper 3, or by measuring a predetermined weight of the waste by a load cell system.

The waste injected into the above-described hopper 3 is injected into the pyrolysis chamber 39 in a predetermined amount by the automatic waste injection apparatus 1.

The slider 23 of the first slide gate 5 is driven to be opened by the first cylinder 20 operated by oil pressure or pneumatic pressure based on the detection of the sensor for detecting fixed amount injection of waste 4 installed on the above-described hopper 3. Then, the first slide gate 5 is driven to be shut off by the first cylinder 20 when a predetermined period of time (3-5 seconds) elapses after the predetermined amount of waste inside the hopper 3 was injected on the second slide gate 6.

Here, the above-described air removing means is driven to remove external air and an anaerobic state is created inside the interim storing hopper 7 between the first and the second slide gates 5 and 6.

That is, the external air flowing into the interim storing hopper 7 along with the waste is sucked into the vacuum tank 14 in an instant by the opening of the vacuum valve 12 connected to the vacuum tank 13 that creates a vacuum state by use of the vacuum pump 14, and thereby the interim storing hopper 7 maintains a vacuum state.

That is, the external air flowing into the interim storing hopper 7 passes through the vacuum filter 11, the vacuum valve 12, the vacuum tank 13, and the vacuum pump 14 in turn, and is provided into the gas burning chamber 37.

On the other hand, the slider 23 of the second slide gate 6 is driven to be opened by the second cylinder 24, and the waste stored in the interim storing hopper 7 falls down perpendicularly.

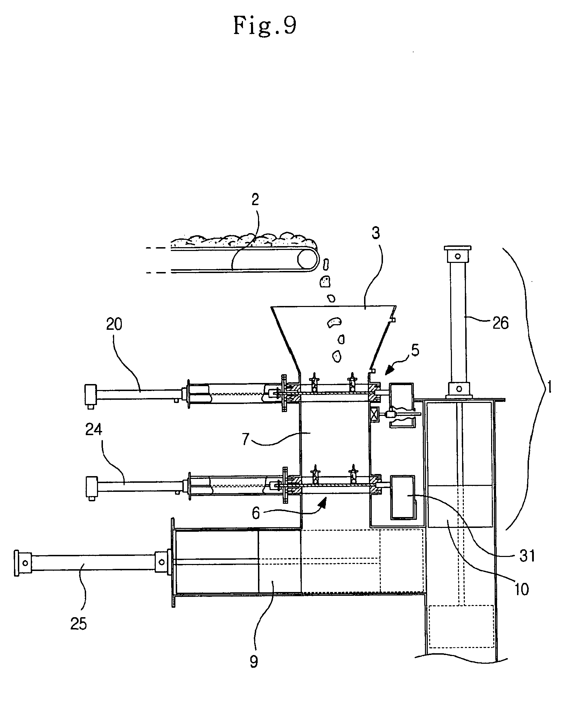

Here, as illustrated in Fig. 9, the first pusher 9 is driven to be slid in a horizontal direction by the third cylinder 25 interlocked with the second slide gate 6, and moves the waste fallen from the interim storing hopper 7 to the right direction of the drawing.

Then, the second pusher 10 is driven to be slid in a perpendicular direction by the fourth cylinder 26, and drops the waste at the inlet 8 of the pyrolysis chamber 39.

Here, because the waste is compulsorily injected into the inlet 8 of the pyrolysis chamber 39 by the driving of the second pusher 10, the phenomenon, in which a big particle of waste is caught at the inlet of the pyrolysis chamber 39 and spins free (so called slip phenomenon) is prevented.

The pyrolysis gas flowing into the interim storing hopper 7 from the pyrolysis chamber 39 is removed by the driving of the above-described air removing means. The waste discharged from the hopper 3 may be successively injected into the pyrolysis chamber 39 in a predetermined amount by repeating successively performing the above-described processes.

On the other hand, water separation, dehydration, desulfurization, depolymerization, deecarboxylization, breakdown of carbon bond ring (C-C bond ring), formation of aliphatic group in the shape of a chain, aromatization, breakdown of C-O bond and breakdown of C-N bond occur in the pyrolysis chamber 39.

When the waste is automatically injected into the pyrolysis chamber 39 from the interim storing hopper 7, the waste is moved to the right direction in Fig. 1 (the direction marked by an arrow) by the transport wing 34a formed on the outer circumference of the transport screw 34. While being moved, the waste that is melted and evaporated is successively pyrolized by the indirectly provided heat at the pyrolysis chamber 39 maintaining a high-temperature and hypoxic environment.

Here, the rotation power of the driving motor 62 of the above-described driving means is transmitted to the driven gear 63a fixed to the transport screw 34 through the driving gear 63 and chain 64 connected to the driving motor. Therefore, the transport screw 34 is rotated at a predetermined speed, being supported by a sealing unit 68 mounted on the frame 66 to support bearing that supports both ends of the transport screw 34 and the casing 70 that forms the pyrolysis chamber 39.

On the other hand, the heat source that indirectly provides heat to the waste is provided from the gas burning chamber 37 of high temperature. That is, the temperature inside the pyrolysis space of the pyrolysis chamber 39 at the initial stage of the driving of the pyrolysis device is raised to a predetermined temperature (250 to 450°C) by the driving of the gas burning chamber 37 of high temperature that uses light oil or refined oil.

Here, the gas burning chamber 37 uses initial gas (light oil, etc.) before the temperature inside the gas burning chamber 37 is raised to a predetermined temperature, since the pyrolysis gas is not produced from the pyrolysis chamber 39.

The exhaust gas heated at the gas burning chamber 37 indirectly heats and pyrolizes the waste inside the pyrolysis chamber 39, by moving along the space between the inner surface of the casing 70 and the outer surface of the pyrolysis chamber 39 separated therefrom, i.e., the transfer passage of heat source of pyrolysis of waste 43.

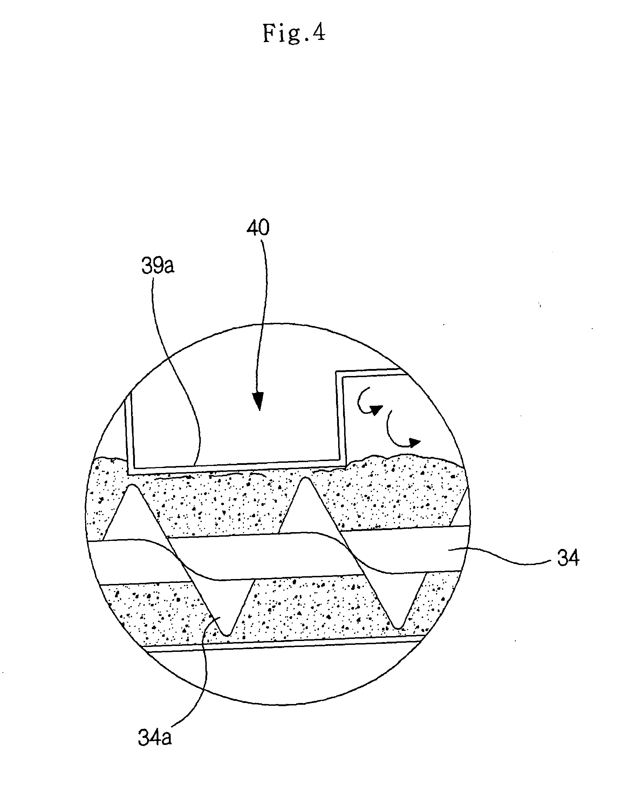

On the other hand, as illustrated in Fig. 4, when the waste injected into the above-described pyrolysis chamber 39 is pyrolized, the gap between the casing 39a at the inlet side corresponding to the section for preventing backward flow of gas 40 of the pyrolysis chamber 39 and the transport wing 34a is formed to be minimized, and the waste fills this gap, and thus, the pyrolysis gas of high temperature from the pyrolysis chamber 39 is prevented from flowing backward to the inlet 8 of the pyrolysis chamber 39.

On the other hand, the waste is moved to the side of the outlet 19 along the transport space 39c that is formed to be circular at the lower part of the pyrolysis chamber 39 having a streamlined section, when the above-described transport screw 34 is driven.

The pyrolysis gas evaporated at the time of pyrolysis of the waste pyrolizes the waste by indirectly providing heat of high temperature, staying at the staying space 39d formed at the upper part of the pyrolysis chamber 39, and then is discharged to the catalyst reaction column 45 through the pyrolysis gas outlet 39e.

Also, since the pyrolysis gas is discharged after going through the processes of production and condensation of the pyrolysis gas inside the pyrolysis chamber 39, the waste plastics provide lubricating effects on the transport wing 34a of the transport screw 34 and the inside of the pyrolysis chamber 39, and provides lubricating effects on the slide gates 5 and 6 of the waste injection device 1 and discharging device 101.

Therefore, a separate lubricating means is not necessary.

On the other hand, the pyrolysis gas discharged through the pyrolysis gas outlet 39e after being pyrolized passes through the catalyst reaction column 45 and is cracked from high molecular weight gas to low molecular weight gas, after passing through desulfurization, denitrification, and dechloination removing device, and then is transported to the distillation column 67. In the distillation column 67, refined oil like heavy oil, light oil and volatile oil is produced according to the boiling points from the pyrolysis gas, and a part of the refined oil is provided to the main burner 35 of the gas burning chamber 37 as initial fuel.

Here, the pyrolysis gas outlet 39e is formed at the upper part of the end of the pyrolysis chamber 39 inside the transfer passage of heat source of pyrolysis 43.

Therefore, when the refined oil producing means 100 is operated, the distillation equipment and the exhaust gas of the pyrolysis chamber 39 have the same temperature, and therefore the emulsification process from the waste synthetic-highly polymerized compound is normally performed.

On the other hand, the pyrolysis gas discharged from the pyrolysis chamber 39 is reformed by going through the synthetic zeolite catalyst column 45 connected to the pyrolysis gas outlet 39e. The reaction temperature of the catalyst column 45 is 220-400°C, and here, the carbon rings of the pyrolysis gas are decomposed to smaller carbon rings, and the pyrolysis gas is reformed to smaller hydrocarbon, and thereby a large amount of light oil is produced.

The production of wax and tar having many carbon rings is minimized by letting the pyrolysis gas go through the catalyst column 45. Heavy oil is produce at the lower part of the distillation column 67 by controlling the temperature to be more than 360°C, light oil components are extracted at the middle part of the distillation column 67 by controlling the temperature to be 240-350°C, and volatile oil components are extracted at the upper part of the distillation column 67 by controlling the temperature to be below 130°C.

The remnants (char) moved toward the outlet 18 along the transport wing 34a after going through the pyrolysis process is moved toward the above-described automatic discharging device 101. When the slider 23 is driven to be open by the first cylinder 20 of the above-described first slide gate 5, the pyrolized remnants are injected into the interim storing hopper 19 and the slider 23 is shut off after a setup time (3-5 seconds) elapses.

Here, a small amount of pyrolysis gas that flows into the interim storing hopper 19 along with the remnants is removed by the opening of the vacuum valve 12 connected to the vacuum pump 14, and thereby the inside of the interim storing hopper 19 maintains an anaerobic state.

After the ashes are safely discharged to the outside by the opening of the above-described second slide gate 6, the slider 23 of the second slide gate 6 is shut off. Here, the external air that flows into the interim storing hopper 19 from the outside is sucked into the vacuum tank 13 by the opening of the above-described vacuum valve 12, and thus the interim storing hopper 19 maintains an anaerobic state.

Accordingly, the ashes transported after being pyrolized in the above-described pyrolysis chamber 39 may be successively discharged.

On the other hand, if the opening and the shutting off operation of the slider 23 is interfered by the foreign materials accumulated at the end of the slider 23 or in the guiding groove 22 by the successive driving of the first and the second slide gates 5 and 6 (when the first and the second gates 5 and 6 malfunction), the guiding groove (22) may be prevented from being blocked by using the foreign material removing case 31 formed to communicate with the end of the guiding groove 22. Here, it is needless to say that the foreign material accumulated in the above-described foreign material removing case 31 may be removed by opening the door 31a during the operation of the device.

When the above-described first and second cylinders 20,24 are driven, the sealing is maintained by the ball 27, which presses and supports the upper surface of the slider 23 horizontally moving along the guiding groove 22 formed in the gate body 21 and the extension guide 21a against the gate body 21 and the extension guide 21a.

Accordingly, the leakage of gas or air through the guiding groove 22 is prevented.

The guider 30 mounted on the connection groove 22 formed between the extension guide 21 a and the slider 23 enables precise horizontal movement and reciprocating driving of the slider 23, and prevents friction between the gate body 21 and the slider 23.

By repeating performing this process, the inside of the above-described pyrolysis chamber 39 continuously maintains a high-temperature and hypoxic state, which enables successive pyrolysis operation.

The pyrolysis speed of the waste injected into the inlet of the pyrolysis chamber 39 is determined by the composition ratio and moisture content of the waste. The waste is successively moved to the right direction (the direction marked by an arrow) of Fig. 1 along the transport wing 34a formed on the transport screw 34 in the shape of a spiral. Here, the transport screw 34 is variably driven by the variable driving of the above-described driving motor 62, and thereby the pyrolysis speed of the waste is variably adjusted and the pyrolysis yield may be improved.

On the other hand, in a case where the temperature of the inside of the above-described pyrolysis chamber 39 is maintained at 250-450°C, the body of the pyrolysis chamber 39 and the transport screw 34 are repeatedly contracted and expanded in a longitudinal direction thereof by the heat of high-temperature. Here, the connection member 44 having elasticity that is installed at the connection portion between the pyrolysis gas outlet 39e and the distillation column 67 protects the connection portion, when the pyrolysis chamber 39 is contracted and thermal-expanded in a longitudinal direction thereof (15-40mm of thermal expansion occurs) due to the repetitive operation thereof.

The air and gas, which flows into the interim storing hopper 19 between the first and the second slide gates 5 and 6 when pyrolized remnants are discharged, are provided to the gas burning chamber 37 by way of the vacuum filter 11, the vacuum valve 12, the vacuum tank 13 and the vacuum pump 14, like in the first and the second slide gates 3 and 4.

As shown above, the successive pyrolysis system of waste synthetic-highly polymerized compound in accordance with the present invention has the following advantages.

The rate of operation of the pyrolysis device is maximized by successively injecting the waste in a predetermined amount and successively discharging ashes discharged after going through the pyrolysis process, when pyrolizing combustible high-polymerized compound like waste plastics by indirect heating at the pyrolysis chamber maintaining a high-temperature and anaerobic or hypoxic environment.

Also, the distillation column for producing refined oil according to the boiling points from the pyrolysis gas is installed perpendicularly to the upper part of the pyrolysis gas outlet. The after service expenses is reduced and the durability is increased by installing a buffer means on the connection portion between the pyrolysis gas outlet and the distillation column and protecting the connection portion against contraction and thermal expansion.

Also, waste can be used as energy source by producing refined oil including heavy oil, light oil and volatile oil according to the boiling points from the pyrolysis gas at the distillation column and reusing it as heat source of pyrolysis of the waste.

Also, the pyrolysis speed of the waste is obviously improved by optimizing the contact surface area of the heat source of the pyrolysis that indirectly contacts the waste at the time of the pyrolysis.

The foregoing embodiment and advantages are merely exemplary and are not to be construed as limiting the present invention. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

## Claims

1. A successive pyrolysis system of waste synthetic-highly polymerized compound, comprising:
a hopper, which waste is provided to and is stored in a predetermined amount;
an automatic waste injection device, which discharges a predetermined amount of waste from the hopper, and comprises an air removing means for maintaining a hypoxic environment inside by removing external air flowing in along with the waste;
a pyrolysis chamber for maintaining a high-temperature and hypoxic environment, and successively pyrolizing the waste by indirect heating, in which two or more transport screws are installed rotatably by a driving means to transport, melt and evaporate the waste provided from the waste injection device;
a gas burning chamber for burning noncondensable gas among pyrolysis gas produced at the time of the pyrolysis of the waste, and providing heat of a predetermined temperature to the outer surface of the pyrolysis chamber to be used as heat source for the pyrolysis of the waste provided to the pyrolysis chamber;
a refined oil producing means connected perpendicularly to the upper part of a gas outlet of the pyrolysis chamber, for producing refined oil from the pyrolysis gas catalyst reacted at a catalysis reaction column according to boiling point at a distillation column, and providing residual noncondensable gas that is not condensed to the gas burning chamber as initial fuel; and
an automatic discharging device for successively discharging ashes transported after being pyrolized from the pyrolysis chamber, comprising an air removing means for maintaining a hypoxic environment inside by removing external air, which flows in from the outside when discharging ashes, and the pyrolysis gas discharged from the pyrolysis chamber

2. The successive pyrolysis system of waste synthetic-highly polymerized compound according to Claim 1, wherein the automatic waste injection device and discharging device comprise:
a first slide gate, which is driven by a first cylinder to be slidingly moved along a guiding groove formed in a gate body, and respectively opens and shuts off the outlet of the hopper and the outlet of pyrolized remnants; and
a second slide gate, which is driven by a second cylinder to be slidingly moved along a guiding groove formed in a gate body and forms an interim storing hopper for maintaining a hypoxic state in a space between the first slide gate

3. The successive pyrolysis system of waste synthetic-highly polymerized compound according to Claim 1, wherein the waste is measured by a load cell or a photo sensor and then is injected into the hopper to store the waste in the hopper in a predetermined amount by a sensor for detecting fixed amount injection installed on the hopper

4. The successive pyrolysis system of waste synthetic-highly polymerized compound according to Claim 3, wherein the first and second slide gates comprise:
an extension guide formed to be extended from the gate body for supporting the slider to slide in a horizontal direction when the slider secedes from the guiding groove;
a seal maintaining means consisting of a ball for maintaining seal by pressing the upper surface of the slider moving slidingly along the guide groove formed in the gate body and the extension guide and sticking the slider to the body, and an elastic member for elastically supporting the ball; and
a guider connected to a connection groove formed between the bottom surface of the slider and the contact surface of the extension guide, for preventing friction between the gate body and the slider when the slider moves

5. The successive pyrolysis system of waste synthetic-highly polymerized compound according to Claim 4, wherein the quality of the material of the guider is weaker than the quality of material of the slider to prevent the slider from being broken by friction when the slider moves

6. The successive pyrolysis system of waste synthetic-highly polymerized compound according to Claim 4, comprising a foreign material removing case mounted on the gate body to communicate with the guiding grooves of the first and the second slide gates for accumulating foreign materials discharged from the guiding grooves when the slider moves

7. The successive pyrolysis system of waste synthetic-highly polymerized compound according to Claim 1, wherein the pyrolysis chamber comprises:
a section for preventing backward flow of gas having a circular section, for minimizing the gap between the transport screw and the inlet and outlet casings of the pyrolysis chamber and intercepting backward flow of the pyrolysis gas;
a transport space formed on the lower part of the pyrolysis chamber, for transporting waste when the transport screw is driven; and
a pyrolysis gas staying space formed on the upper part of the pyrolysis chamber, for holding the pyrolysis gas evaporated at the time of pyrolysis of the waste

8. The successive pyrolysis system of waste synthetic-highly polymerized compound according to Claim 1, wherein the cross section of the pyrolysis chamber is formed to be a circle, an oval, a rectangle or a streamline

9. The successive pyrolysis system of waste synthetic-highly polymerized compound according to Claim 7, wherein the size of the pyrolysis gas staying space of the pyrolysis chamber is formed to be a half of the size of the diameter of the transport wing formed on the transport screw in the shape of a spiral

10. The successive pyrolysis system of waste synthetic-highly polymerized compound according to Claim 1, wherein comprising a connection member that is installed on the connection portion between the pyrolysis gas outlet of the pyrolysis chamber and the distillation column, and has elasticity to protect the connection portion when the pyrolysis chamber is contracted and thermal-expanded in a longitudinal direction thereof, by the repeated driving thereof

11. The successive pyrolysis system of waste synthetic-highly polymerized compound according to Claim 1, wherein the pyrolysis gas outlet of the pyrolysis chamber is installed inside the transfer passage of heat source of pyrolysis of the waste.

12. The successive pyrolysis system of waste synthetic-highly polymerized compound according to Claim 1, wherein the waste injection device comprises:
a first pusher installed on the bottom of the second slide gate to be slidingly moved in a horizontal direction, when a third cylinder is driven, for moving the waste discharged from the interim storing hopper in a horizontal direction; and
a second pusher installed on the perpendicular upper part of the inlet of the pyrolysis chamber to be slidingly moved upward and downward, when a fourth cylinder is driven, for injecting the waste moved by the first pusher into the inlet of the pyrolysis chamber

13. The successive pyrolysis system of waste synthetic-highly polymerized compound according to Claim 1, wherein a second burner is installed in the transfer passage of heat source of pyrolysis for pyrolizing the waste
